# EUROPÄISCHE PATENTANMELDUNG

(11) **EP 2 544 338 A2**
(43) Veröffentlichungstag der Anmeldung: **09.01.2013**
(21) Anmeldenummer: 12173989.0
(22) Anmeldetag: 28.06.2012
(51) Int. Cl.: H02K 1/30, H02K 15/03

(54) **Rotorbaugruppe für einen Elektromotor und Verfahren zum Herstellen einer Rotorbaugruppe**

(30) Priorität: 04.07.2011 DE 102011078578
(71) Anmelder: ROBERT BOSCH GMBH, 70442 Stuttgart (DE)
(72) Erfinder: Evans, Steven Andrew, 77815 Buehl (DE)

(57) **Zusammenfassung**

Die Erfindung betrifft eine Rotorbaugruppe (10; 10a) für einen Elektromotor, bei dem ein aus einer Vielzahl von Rotorblechen (11, 12; 12a, 13; 13a, 14; 14a) zusammengesetztes, eine Durchgangsöffnung (15) zur Lagerung in einer Ankerwelle (17) aufweisendes Rotorblechpaket (16) radial von mehreren, in Ausrichtung mit der Ankerwelle (17) angeordneten Permanentmagnetelementen (18) umgeben ist, wobei die axiale Erstreckung der Permanentmagnetelemente (18) auf der den Permanentmagnetelementen (18) zugewandten Seite des Rotorblechpakets (16) zumindest im Wesentlichen der axialen Erstreckung des Rotorblechpakets (16) entspricht. Erfindungsgemäß ist es vorgesehen, dass das Rotorblechpaket (16) auf der der Ankerwelle (17) zugewandten Seite zumindest an einer Stirnseite des Rotorblechpakets (16) einen rotorblechfreien Bereich (26) aufweist.

## Beschreibung

### Stand der Technik

Die Erfindung betrifft eine Rotorbaugruppe für einen Elektromotor nach dem Oberbegriff des Anspruchs 1. Ferner betrifft die Erfindung ein Verfahren zum Herstellen einer erfindungsgemäßen Rotorbaugruppe.

Eine Rotorbaugruppe nach dem Oberbegriff des Anspruchs 1 ist aus der Praxis bereits bekannt. Sie ist Bestandteil eines Innenläufer-Elektromotors und weist eine Vielzahl von übereinander geschichteten, ausgestanzten Rotorblechen auf. Die Rotorbleche weisen jeweils eine zentrale Durchgangsöffnung auf, so dass die übereinander geschichteten Rotorbleche auf der Ankerwelle des Elektromotors aufgefädelt werden können. Parallel zur Ankerwelle sind am Außenempfang der Rotorbleche Permanentmagnetelemente angeordnet, die streifenförmig bzw. länglich ausgebildet sind. Eine derartige, durch Armierungen oder Ähnlichem ummantelte Rotorbaugruppe ist im Elektromotor radial von einer Statorbaugruppe umgeben, deren ebenfalls aus einer Vielzahl von übereinander geschichteten Statorblechen bestehende Statorbaugruppe die Wicklungen des Elektromotors trägt. Dadurch, dass die Höhe der Statorbaugruppe insgesamt etwas geringer sein kann als die Höhe der Rotorbaugruppe, können die Permanentmagnetelemente axial an beiden Seiten über die Statorbaugruppe hinausragen. Die kürzere Baulänge bzw. Höhe der Statorbaugruppe ergibt sich dadurch, dass sich beim Umwickeln der Statorbleche mit den Drahtwicklungen an den Stirnseiten der Statorbaugruppe durch das Zurückwickeln die Wicklungen eine zusätzliche Höhe aufbaut, in deren Bereich es aus magnetischen Gründen vorteilhaft ist, wenn sich dort ebenfalls die Permanentmagnetelemente zur Flussführung befinden.

### Offenbarung der Erfindung

Ausgehend von dem dargestellten Stand der Technik liegt der Erfindung die Aufgabe zugrunde, eine Rotorbaugruppe für einen Elektromotor nach dem Oberbegriff des Anspruchs 1 derart weiterzubilden, dass bei unveränderten magnetischen Eigenschaften der Rotorbaugruppe weniger Material für die Rotorbaugruppe, insbesondere weniger Material für die Rotorbleche, verwendet werden kann. Diese Aufgabe wird erfindungsgemäß bei einer Rotorbaugruppe für einen Elektromotor mit den Merkmalen des Anspruchs 1 dadurch gelöst, dass das Rotorblechpaket auf der der Durchgangsöffnung für die Ankerwelle zugewandten Seite zumindest an einer Stirnseite des Rotorblechpakets einen rotorblechfreien Bereich aufweist. Mit anderen Worten gesagt bedeutet dies, dass das Rotorblechpaket an wenigstens einer Stirnseite eine insbesondere ringförmige Ausnehmung bzw. Aussparung aufweist, an der kein Rotorblechmaterial vorhanden ist. Diese Aussparung wird radial jedoch von dem Rotorblechpaket begrenzt, das somit in Überdeckung mit den Permanentmagnetelementen an der jeweiligen Stirnseite mit diesen bündig abschließt. Somit wird es erfindungsgemäß ermöglicht, eine Führung der magnetischen Feldlinien an den Enden der Permanentmagnetelemente zu erreichen, wobei gleichzeitig der Materialeinsatz der Rotorbaugruppe im Bereich der Rotorbleche reduziert ist. Dadurch ergibt sich beispielsweise ein besonders geringes Gewicht der Rotorbaugruppe bzw. ein geringerer Materialeinsatz und somit geringere Herstellkosten.

Vorteilhafte Weiterbildungen der erfindungsgemäßen Rotorbaugruppe sind in den Unteransprüchen angegeben.

Zur Ausbildung des rotorblechfreien Bereichs ist es bevorzugt vorgesehen, dass zumindest das an einer Stirnseite des Rotorblechpakets angeordnete äußerste Rotorblech einen gegenüber den anderen Rotorblechen radial vergrößerten Verlängerungsabschnitt aufweist, der in einer Richtung parallel zur Ankerwelle umgeformt ist, derart, dass die Rotorbleche eine Anlagefläche für die Permanentmagnetelemente ausbilden, die sich über die gesamte Länge der Permanentmagnetelemente erstreckt.

Ganz besonders bevorzugt ist eine Lösung, bei der mehrere, direkt aneinander anschließende Rotorbleche an einer Stirnseite einen radial vergrößerten Verlängerungsabschnitt aufweisen. Dadurch ergibt sich eine erhöhte Wanddicke bzw. Wandstärke des umgeformten Bereichs sowie eine besonders günstige Führung der Magnetfeldlinien im Bereich der Enden der Permanentmagnetelemente.

Beim Umformen bzw. Umbiegen der einzelnen Verlängerungsabschnitte in die gemeinsame Längsrichtung weisen die Verlängerungsabschnitte unterschiedliche Biegeradien auf. Dadurch ergibt sich eine mit Stufen versehene Stirnfläche an den umgebogenen Verlängerungsabschnitten. Um diesen Effekt zu vermeiden, ist es in einer weiteren konstruktiven Umsetzung der Erfindung vorgesehen, dass die Verlängerungsabschnitte vor dem Umformen eine unterschiedliche Länge aufweisen, derart, dass die Länge der Verlängerungsabschnitte in Richtung des äußersten Rotorblechs des Rotorblechpakets abnimmt, und dass die unterschiedliche Länge bevorzugt derart ist, dass die umgeformten Verlängerungsabschnitte eine ebene Stirnfläche an dem Rotorblechpaket ausbilden.

Um einen möglichst geringen Materialeinsatz für die Verlängerungsabschnitte zu ermöglichen, bei denen die umgeformten Verlängerungsabschnitte gleichzeitig bündig an den Permanentmagnetelementen anliegen wird weiterhin vorgeschlagen, dass die Verlängerungsabschnitte im Wesentlichen rechteckförmig ausgebildet sind.

Eine weitere Ausgestaltung zur Ermöglichung einer besonders leichten Rotorbaugruppe wird ermöglicht, wenn beim Vorhandensein mehrerer Rotorbleche mit Verlängerungsabschnitten an einer Stirnseite die Verlängerungsabschnitte eine unterschiedliche Breite aufweisen. Insbesondere ist dabei vorgesehen, dass die Breite in Richtung des axial außen angeordneten Rotorblechs abnimmt.

Die Erfindung umfasst auch ein Verfahren zum Herstellen einer erfindungsgemäßen Rotorbaugruppe, bei dem eine Vielzahl von Rotorblechen zu einem Rotorblechpaket axial auf einer Welle angeordnet werden, wobei erfindungsgemäß vorgesehen ist, dass an zumindest einer Stirnseite des Rotorblechpakets wenigstens ein Rotorblech verwendet wird, dass einen radial vergrößerten Verlängerungsabschnitt aufweist, und dass der radial vergrößerte Verlängerungsabschnitt parallel zur Ankerwelle umgeformt wird.

In praktischer Umsetzung des Herstellverfahrens wird vorgeschlagen, dass zum Umformen des Verlängerungsabschnitts ein ringförmiges Werkzeugelement verwendet wird, das axial gegen die Stirnseite des Ankerblechpakets angeordnet wird und das beim Umformen des Verlängerungsabschnitts mittels eines zweiten Werkzeugelements ein Widerlager für das zweite Werkzeugelement ausbildet, und dass nach dem Umformen das erste Werkzeugelement axial von der Stirnseite des Rotorblechpakets entfernt wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Querschnitt durch eine Rotorbaugruppe und eine Statorbaugruppe (ohne Wicklungen) nach dem Stand der Technik,
- Fig. 2: einen Schnitt in der Ebene II-II der Fig. 1,
- Fig. 3: einen Schnitt in der Ebene II-II der Fig. 1 bei einer erfindungsgemäßen Rotorbaugruppe,
- Fig. 4 und 5: vereinfachte Darstellung zur Erläuterung des Herstellungsverfahrens einer erfindungsgemäßen Rotorbaugruppe,
- Fig. 6: einen Querschnitt durch eine erfindungsgemäße Rotorbaugruppe vor dem Umformen der stirnseitigen Rotorbleche zur Erläuterung der Geometrie der stirnseitigen Rotorbleche,
- Fig. 7: eine perspektivische Darstellung eines Teils einer erfindungsgemäßen Rotorbaugruppe,
- Fig. 8: eine Draufsicht auf eine Rotorbaugruppe gemäß Fig. 7 bei montierten Permanentmagnetelementen und
- Fig. 9: eine gegenüber der Fig. 7 modifizierte Rotorbaugruppe, ebenfalls in perspektivischer Ansicht.

Gleiche Bauteile bzw. Bauteile mit gleicher Funktion sind in den Figuren mit den gleichen Bezugsziffern versehen.

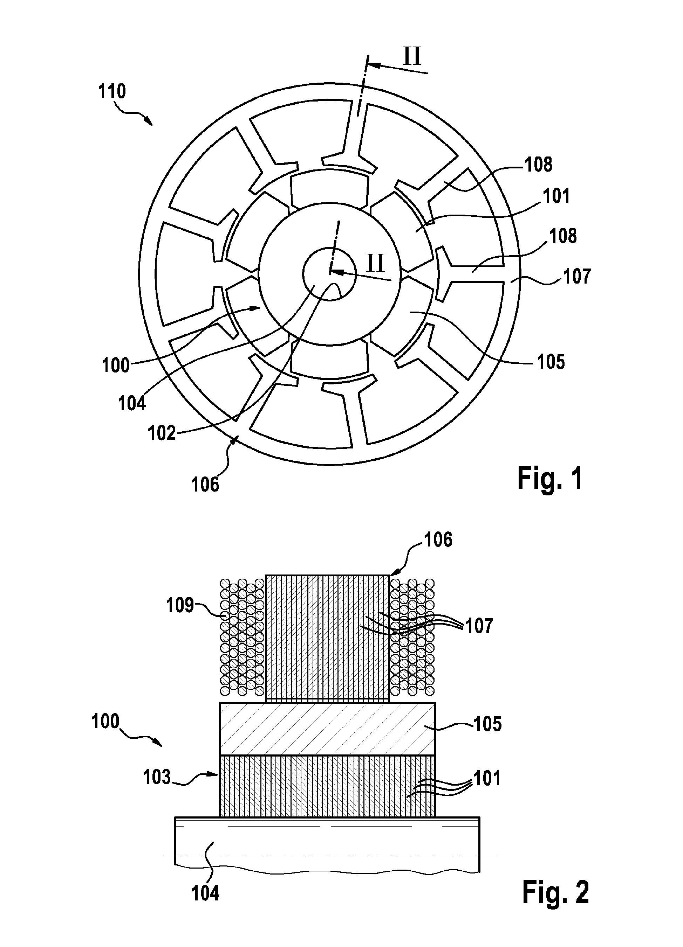

In den Fig. 1 und 2 ist eine Rotorbaugruppe 100 nach dem Stand der Technik dargestellt: Die Rotorbaugruppe 100 umfasst eine Vielzahl von axial übereinander gestapelten, als Stanzteile ausgebildeten identischen Rotorblechen 101, die beispielsweise durch entsprechende Beschichtung (Backlack) und Erwärmung aneinanderhaften. Die Rotorbleche 101 sind ringförmig ausgebildet und weisen eine zentrale Durchgangsöffnung 102 auf, so dass das aus den Rotorblechen 101 gebildete Rotorblechpaket 103 mit einer Ankerwelle 104 drehfest verbunden werden kann. An der Umfangsfläche des Rotorblechpakets 103 sind beispielhaft sechs Permanentmagnetelemente 105 in gleichmäßigen Winkelabständen zueinander angeordnet.

Wesentlich dabei ist, dass die Permanentmagnetelemente 105, die länglich bzw. streifenförmig ausgebildet sind, über die gesamte axiale Erstreckung des Rotorblechpakets 103 angeordnet sind, d. h., dass deren Stirnflächen in etwa bündig mit den Stirnseiten des Rotorblechpakets 103 abschließen. Die Permanentmagnetelemente 105 sind mit dem Rotorblechpaket 103 fest verbunden, beispielsweise durch eine nicht dargestellte Verklebung, Armierung oder ähnlichem. Eine derart ausgebildete Rotorbaugruppe 100 ist Bestandteil insbesondere eines Innenläufer-Elektromotors 110. Der Innenläufer-elektromotor 110 umfasst neben der Rotorbaugruppe 100 eine Statorbaugruppe 106, die aus einer Vielzahl von ebenfalls aus Stanzteilen ausgebildeten, übereinander angeordneten und miteinander verbundenen identischen Statorblechen 107 besteht.

Wesentlich dabei ist, dass die Statorbaugruppe 106, wie am besten aus der Fig. 2 erkennbar ist, eine geringere axiale Erstreckung aufweist als die Permanentmagnetelemente 105 bzw. das Rotorblechpaket 103. Die geringere axiale Erstreckung ergibt sich dadurch, dass die Zähne 108 der Statorbleche 107 mit einem lediglich in der Fig. 2 erkennbaren Draht 109 umwickelt sind, die die stromdurchflossenen Wicklungen des Innenläufer-Elektromotors 110 ausbilden. Dabei überragen die Drähte 109 an den Stirnseiten der Zähne 108 die Statorbaugruppe 106 in axialer Richtung derart, dass die Drähte 109 in etwa bündig mit der Stirnseite der Permanentmagnetelemente 105 abschließen. Durch eine derartige Ausbildung wird insbesondere über die gesamte Länge der Permanentmagnetelemente 105 angeordneten Rotorbleche 101 eine günstige Führung der Magnetfeldlinien beim Betrieb des Innenläufer-Elektromotors 110 erzielt.

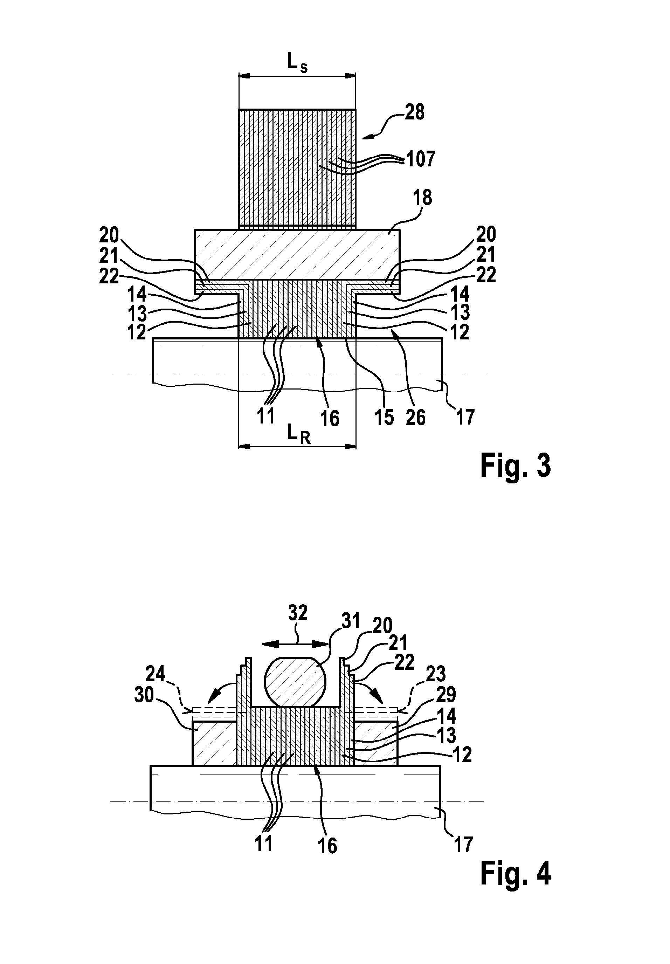

In der Fig. 3 ist eine erfindungsgemäße Rotorbaugruppe 10 dargestellt wie sie anstelle der Rotorbaugruppe 100 bei einem Innenläufer-Elektromotor 110 ersatzweise eingesetzt werden kann: Die erfindungsgemäße Rotorbaugruppe 10 umfasst eine Vielzahl von axial übereinander gestapelten identischen Rotorblechen 11 (entsprechend den Rotorblechen 101 bei der Rotorbaugruppe 100), wobei in dem in der Fig. 3 dargestellten Ausführungsbeispiel die stirnseitig jeweils drei letzten Rotorbleche 12 bis 14, die eine andere Geometrie aufweisen wie Rotorbleche 11, sich an die (mittigen) Rotorbleche 11 anschließen. Alle Rotorbleche 11 bis 14 weisen jeweils in Analogie zu den Rotorblechen 101 der Fig. 1 eine mittiges Durchgangsloch 15 auf, damit das aus den Rotorblechen 11 bis 14 gebildete Rotorblechpaket 16 drehfest auf der Ankerwelle 17 befestigt werden kann.

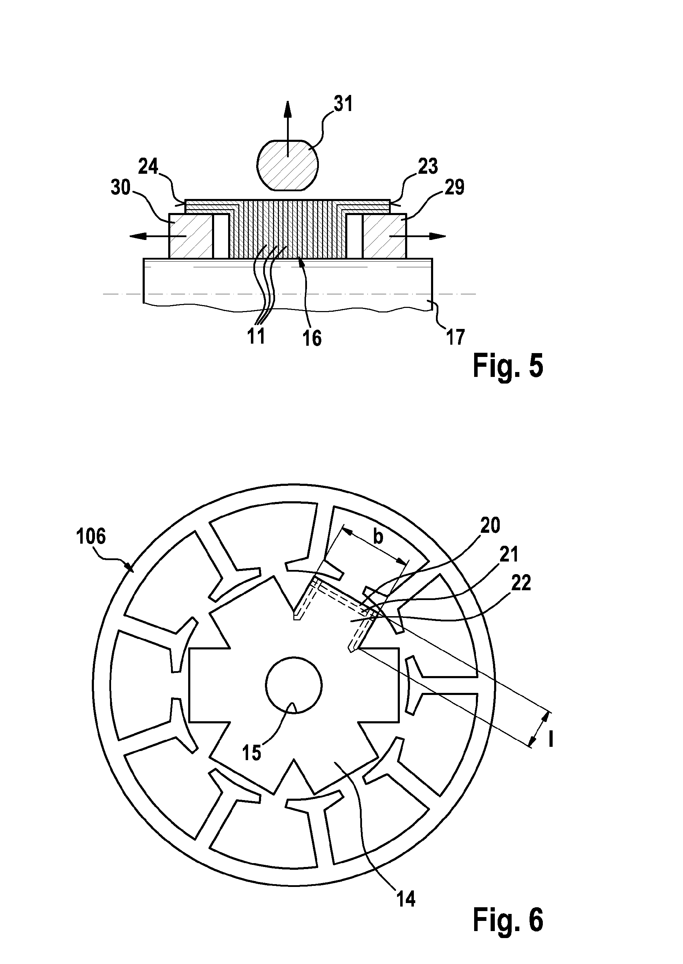

Wie sich insbesondere aus einer Zusammenschau der Fig. 4 und 6 ergibt, weisen die stirnseitig jeweils drei letzen Rotorbleche 12 bis 14 für jedes der Permanentmagnetelemente 18 jeweils einen radialen Verlängerungsabschnitt 20 bis 22 auf. Die Verlängerungsabschnitte 20 bis 22 sind jeweils in etwa rechteckförmig ausgebildet (Fig. 6) und weisen unterschiedliche Breiten b und Längen I auf, derart, dass der Verlängerungsabschnitt 20 an dem den Rotorblechen 11 zugewandten (inneren) Rotorblech 12 die größte Breite b und Länge 1 aufweist, während das das Rotorblechpaket 16 axial bzw. stirnseitig begrenzende Rotorblech 14 die geringste Breite b und Länge I an seinem Verlängerungsabschnitt 22 aufweist.

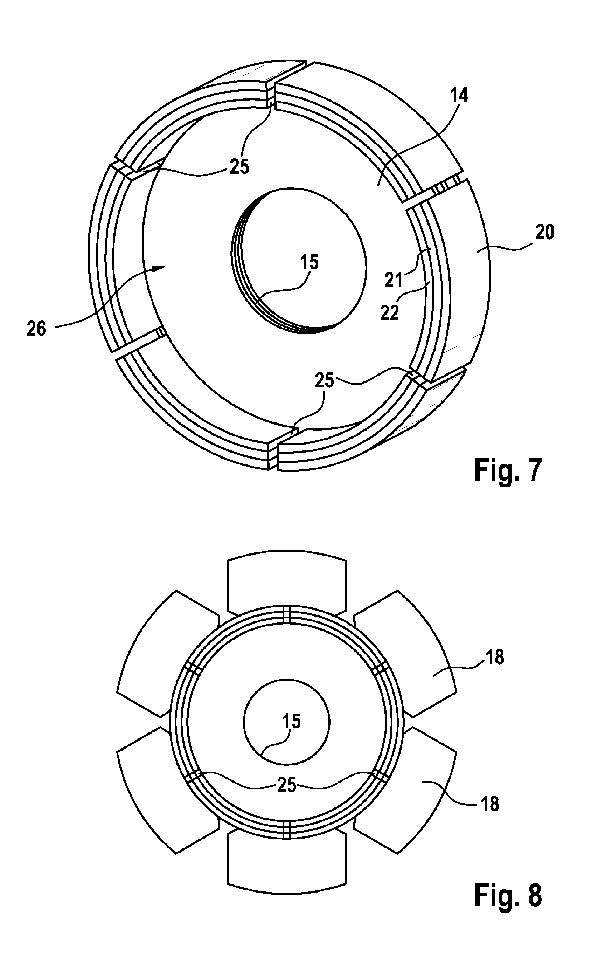

Erfindungsgemäß ist es vorgesehen, dass die jeweils drei letzten Rotorbleche 12 bis 14 an jeder Stirnseite des Rotorblechpakets 16 mit ihren Verlängerungsabschnitten 20 bis 22 aus ihrer zunächst entsprechend der Fig. 4 radialen Ausrichtung in eine parallel zur Längsachse der Ankerwelle 17 verlaufende Richtung, d. h. um 90°, umgeformt werden. Wie insbesondere anhand der Fig. 3 bis 5 sowie 7 erkennbar ist, wird durch die angesprochene unterschiedliche geometrische Ausbildung der Verlängerungsabschnitte 20 bis 22 an den Rotorblechen 12 bis 14 bei den umgeformten Rotorblechen 12 bis 14 bzw. Verlängerungsabschnitten 20 bis 22 jeweils ebene Stirnflächen 23, 24 des Rotorblechpakets 16 erzielt, zwischen denen Schlitze 25 (siehe Fig. 7) ausgebildet sind. In dem Zustand, in dem die Verlängerungsabschnitte 20 bis 22 in ihre zur Ankerwelle 17 ausgerichtete Lage umgeformt sind, ist zwischen der Ankerwelle 17 und dem axial äußeren Rotorblech 14 an den beiden Stirnseiten des Rotorblechpakets 16 jeweils eine ringförmige Aussparung bzw. ein ringförmiger Freiraum 26 ausgebildet. Hierbei ist es wichtig, dass die Anzahl der Rotorbleche 11 bis 14 derart ausgewählt wird, dass die axiale Gesamterstreckung des Rotorblechpakets 16 (in Richtung der Ankerwelle 17) bei umgeformten Rotorblechen 12 bis 14 der axialen Erstreckung der Permanentmagnetelemente 18 entspricht, wie dies aus der Fig. 3 erkennbar ist. Weiterhin ist es bevorzugt vorgesehen, dass die Länge L_{R} des Rotorblechpakets 16 (ohne die Verlängerungsabschnitte 20 bis 22) der Länge L_{S} des Statorblechpakets 28 entspricht.

Das Herstellen eines derartigen Rotorblechpakets 16 mit umgeformten Rotorblechen 12 bis 14 wird nunmehr anhand der Fig. 4 und 5 näher erläutert: In einem ersten Schritt werden an die beiden Stirnseiten des mit den Rotorblechen 12 bis 14 versehenen Rotorblechpakets 16 jeweils ringförmige Werkzeugelemente 29, 30 angelegt, die im dargestellten Ausführungsbeispiel einen im Wesentlichen quadratischen Querschnitt aufweisen. Anschließend wird mittels eines Drückwerkzeugs 31, das sich zunächst im Bereich der Rotorbleche 11 befindet, die Rotorbleche 12 bis 14 durch eine Bewegung in der Ebene des Doppelpfeils 32 waagerecht umgeformt bzw. umgelegt, wie dies durch die gestrichelte Darstellung der Rotorbleche 12 bis 14 in der Fig. 4 angedeutet ist. Zuletzt werden entsprechend der Fig. 5 die Werkzeugelemente 29 und 30 axial aus den entstandenen Freiräumen 26 herausgefahren und das Drückwerkzeug 31 entfernt.

Bei dem bisher beschriebenen Ausführungsbeispiel werden an jeder Stirnseite des Rotorblechpakets 16 jeweils die drei letzten Rotorbleche 12 bis 14 umgeformt, wozu diese geometrisch besonders ausgebildet sind. Selbstverständlich liegt es im Rahmen der Erfindung, Rotorbleche 12 bis 14 lediglich an einer Stirnseite des Rotorblechpakets 16 vorzusehen, und an der anderen Seite des Rotorblechpakets 16 ringförmige Rotorbleche 11. Ebenso liegt es im Rahmen der Erfindung, eine andere Anzahl von speziell geformten Rotorblechen 12 bis 14, beispielsweise nur ein einziges Rotorblech 14, oder mehr als drei Rotorbleche 12 bis 14 vorzusehen.

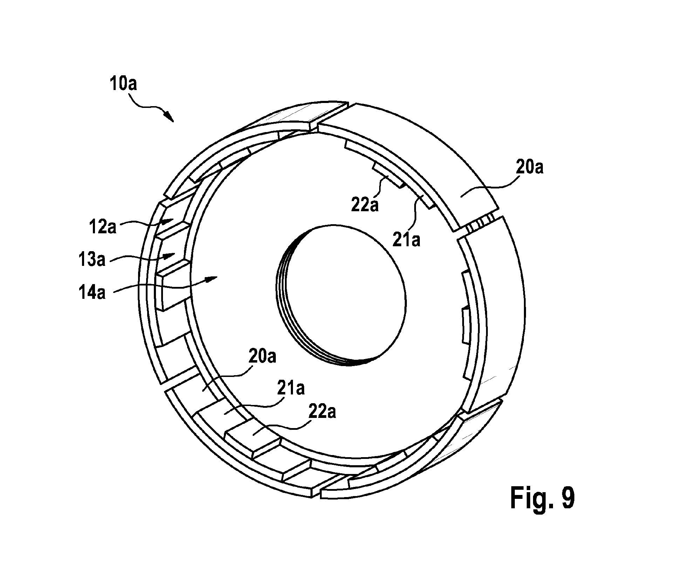

Die letzten drei Rotorbleche 12 bis 14 sind nach dem Umformen ihrer Verlängerungsabschnitte 20 bis 22 in perspektivischer Darstellung in der Fig. 7 dargestellt. Dabei ist die Breite der einzelnen Verlängerungsabschnitte 20 bis 22 jeweils derart, dass die Verlängerungsabschnitte 20 bis 22 den gleichen Winkelbereich ausbilden, wodurch die Schlitze 25 an allen Verlängerungsabschnitten 20 bis 22 ausgebildet sind. In der Fig. 9 ist demgegenüber ein Ausführungsbeispiel dargestellt, bei der die Breite der Verlängerungsabschnitte 20a bis 22a an den Rotorblechen 12a bis 14a derart unterschiedlich ist, dass das radial innerste Rotorblech 14a eine deutlich geringere Breite aufweist als das radial äußere Rotorblech 12a, so dass die Verlängerungsabschnitte 20a bis 22a einander stufenartig überdecken. Bei einer derartigen Ausbildung lässt sich ein besonders geringes Gewicht einer Rotorbaugruppe 10a verwirklichen.

Die soweit beschriebenen Rotorbaugruppen 10, 10a lassen sich in vielfältiger Art und Weise abwandeln bzw. modifizieren, ohne vom Erfindungsgedanken abzuweichen. Dieser besteht darin, zumindest an einer Stirnseite einer Rotorbaugruppe 10, 10a durch Umformen des zumindest axial letzten Rotorbleches 14, 14a an einem Verlängerungsabschnitt 14, 14a einen Freiraum 26 auszubilden, derart, dass die mit den Rotorblechen 11 bis 14 bzw. 11 bis 14a verbundenen Permanentmagnetelemente 18 über deren gesamte axiale Länge von den Rotorblechen 11 bis 14 bzw. 11 bis 14a überdeckt sind.

## Patentansprüche

1. Rotorbaugruppe (10; 10a) für einen Elektromotor, bei dem ein aus einer Vielzahl von Rotorblechen (11, 12; 12a, 13; 13a, 14; 14a) zusammengesetztes, eine Durchgangsöffnung (15) zur Lagerung in einer Ankerwelle (17) aufweisendes Rotorblechpaket (16) radial von mehreren, in Ausrichtung mit der Ankerwelle (17) angeordneten Permanentmagnetelementen (18) umgeben ist, wobei die axiale Erstreckung der Permanentmagnetelemente (18) auf der den Permanentmagnetelementen (18) zugewandten Seite des Rotorblechpakets (16) zumindest im Wesentlichen der axialen Erstreckung des Rotorblechpakets (16) entspricht,
**dadurch gekennzeichnet,**
**dass** das Rotorblechpaket (16) auf der der Ankerwelle (17) zugewandten Seite zumindest an einer Stirnseite des Rotorblechpakets (16) einen rotorblechfreien Bereich (26) aufweist.

2. Rotorbaugruppe nach Anspruch 1,
**dadurch gekennzeichnet,**
**dass** zumindest das an einer Stirnseite des Rotorblechpakets (16) angeordnete äußerste Rotorblech (14; 14a) einen gegenüber den anderen Rotorblechen (11; 12; 12a, 13; 13a) radial vergrößerten Verlängerungsabschnitt (22; 22a) aufweist, der in einer Richtung parallel zur Ankerwelle (17) umgeformt ist, derart, dass die Rotorbleche (11, 12; 12a, 13; 13a, 14; 14a) eine Anlagefläche für die Permanentmagnetelemente (18) ausbilden, die sich über die gesamte Länge der Permanentmagnetelemente (18) erstreckt.

3. Rotorbaugruppe nach Anspruch 2,
**dadurch gekennzeichnet,**
**dass** mehrere, direkt aneinander anschließende Rotorbleche (12, 12a, 13; 13a, 14; 14a) an einer Stirnseite einen radial vergrößerten Verlängerungsabschnitt (20; 20a, 21; 21 a, 22; 22a) aufweisen.

4. Rotorbaugruppe nach Anspruch 3,
**dadurch gekennzeichnet,**
**dass** die Verlängerungsabschnitte (20; 20a, 21; 21a, 22; 22a) vor dem Umformen eine unterschiedliche Länge (I) aufweisen, derart, dass die Länge (I) der Verlängerungsabschnitte (20; 20a, 21; 21 a, 22; 22a) in Richtung des äußersten Rotorblechs (14; 14a) des Rotorblechpakets (16) abnimmt, und dass die unterschiedliche Länge (I) bevorzugt derart ist, das die umgeformten Verlängerungsabschnitte (20; 20a, 21; 21a, 22; 22a) eine ebene Stirnfläche (23, 24) an dem Rotorblechpaket (16) ausbilden.

5. Rotorbaugruppe nach einem der Ansprüche 2 bis 4,
**dadurch gekennzeichnet,**
**dass** die Verlängerungsabschnitte (20; 20a, 21; 21a, 22; 22a) im Wesentlichen rechteckförmig ausgebildet sind.

6. Rotorbaugruppe nach Anspruch 5,
**dadurch gekennzeichnet,**
**dass** beim Vorhandensein mehrerer Rotorbleche (12; 12a, 13; 13a, 14; 14a) mit Verlängerungsabschnitten (20; 20a, 21; 21 a, 22; 22a) die Verlängerungsabschnitte (20; 20a, 21; 21a, 22; 22a) eine unterschiedliche Breite (b) aufweisen.

7. Rotorbaugruppe nach Anspruch 7,
**dadurch gekennzeichnet,**
**dass** die Breite (b) der Verlängerungsabschnitte (20; 20a, 21; 21 a, 22; 22a) in Richtung des axial außen angeordneten Rotorblechs (14; 14a) abnimmt.

8. Rotorbaugruppe nach Anspruch 7,
**dadurch gekennzeichnet,**
**dass** sich die Verlängerungsabschnitte (20a, 21 a, 22a) einander stufenartig überdecken.

9. Verfahren zum Herstellen einer Rotorbaugruppe (10; 10a) nach einem der Ansprüche 1 bis 8, bei dem eine Vielzahl von Rotorblechen (11, 12; 12a, 13; 13a, 14; 14a) zu einem Rotorblechpaket (16) axial auf einer Ankerwelle (17) angeordnet werden,
**dadurch gekennzeichnet,**
**dass** an zumindest einer Stirnseite des Rotorblechpakets (16) wenigstens ein Rotorblech (12; 12a, 13; 13a, 14; 14a) verwendet wird, das einen radial vergrößerten Verlängerungsabschnitt (20; 20a, 21; 21 a, 22; 22a) aufweist, und dass der Verlängerungsabschnitt (20; 20a, 21; 21 a, 22; 22a) parallel zur Ankerwelle (17) umgeformt wird.

10. Verfahren nach Anspruch 9,
**dadurch gekennzeichnet,**
**dass** zum Umformen des Verlängerungsabschnitts (20; 20a, 21; 21 a, 22; 22a) ein ringförmiges Werkzeugelement (29, 30) verwendet wird, das axial gegen die Stirnseite des Ankerblechpakets (16) angeordnet wird und das beim Umformen des Verlängerungsabschnitts (20; 20a, 21; 21a, 22; 22a) mittels eines zweiten Werkzeugelements (31) ein Widerlager für das zweite Werkzeugelement (31) ausbildet, und dass nach dem Umformen das erste Werkzeugelement (29, 30) axial von der Stirnseite des Rotorblechpakets (16) entfernt wird.
